# EUROPEAN PATENT APPLICATION

(11) **EP 4 464 914 A1**
(43) Date of publication of application: **20.11.2024**
(21) Application number: 23740248.2
(22) Date of filing: 10.01.2023
(51) Int. Cl.: F16F 15/12, F16F 15/126, F16H 55/36

(54) **TORSIONAL DAMPER**

(30) Priority: 13.01.2022 JP 2022003618
(71) Applicant: NOK Corporation, Minato-ku Tokyo 105-8585 (JP)
(72) Inventor: NARITA, Nobuhiko, Saihaku-gun, Tottori 683-0362 (JP)
(74) Representative: TBK
(86) International application number: PCT/JP2023/000328
(87) International publication number: WO 2023/136239

(57) **Abstract**

The present invention addresses the problem of providing a torsional damper having reduced radiated noise from a hub. This problem is solved with a torsional damper in which the value of a spring ratio relative to a resonance frequency ratio of a hub and a ring is 0.9 or more.

## Description

### TECHNICAL FIELD

The present invention relates to a torsional damper.

### BACKGROUND ART

Methods making use of sound interference have been proposed as measures for reducing noise radiated from a hub of a torsional damper.

For instance, Patent Document 1 describes a crank pulley including a boss part attached to a front end of a crankshaft, the crank pulley further including a cavity part formed along a front surface outer edge of the boss part and configured to cancel radiation noise radiated from a front surface center of the boss part through the crankshaft making use of sound wave interference, the cavity part being divided into a plurality of spaces.

### CITATION LIST

### PATENT DOCUMENTS

Patent Document 1: JP 2020-41684 A

### SUMMARY OF THE INVENTION

### PROBLEM TO BE SOLVED BY THE INVENTION

In the conventional torsional damper as represented by Patent Document 1, it was necessary to form the cavity part in a hub to impart noise canceling function and therefore there was a need to set the required cavity volume and aperture area in accordance with the frequencies of the radiation noise, and it was assumed that they were not satisfied depending on the size of the torsional damper and the torsional damper lacked versatility.

The torsional damper includes the hub connected to the crankshaft, a vibration ring constituting a damper mass, and a rubber ring constituting a damper spring, and suppresses torsional resonance of the crankshaft (absorbs vibrations) through resonance of the vibration ring in the direction of rotation. The vibration ring very often has a resonance frequency of approximately 300 to 600 Hz in the direction of rotation.

On the other hand, the vibration ring also resonates in the axial direction and its frequency is a few hundred Hz, which is nearly equal to that of torsional vibration.

As for noise radiated from the hub, axial local resonance of the hub very often becomes problematic, and its frequency is as high as a few thousand Hz. In the radiation noise radiated from the hub, the local resonance of the hub is the largest, and therefore a technique for reducing vibrations by any vibration-proof means to reduce the radiation noise is necessary.

The present invention solves the problem as described above. Specifically, the present invention provides a torsional damper in which noise radiated from a hub is reduced.

### MEANS FOR SOLVING THE PROBLEM

The present invention provides a torsional damper in which axial vibrations of a vibration ring are used as a dynamic vibration absorber mechanism to suppress axial local resonance of a hub, whereby noise radiated from the hub is reduced.

The present invention provides a torsional damper in which a spring ratio to a resonance frequency ratio between a hub and a ring takes a value of 0.9 or more.

### EFFECT OF THE INVENTION

The present invention can provide a torsional damper in which noise radiated from a hub is reduced.

### BRIEF DESCRIPTION OF THE DRAWINGS

[FIG. 1] FIG. 1 is a graph showing local resonance of a hub in calculating vibrations using a spring ratio as a parameter.
[FIG. 2] FIG. 2 is a graph in which the spring ratio is subjected to parameter study.
[FIG. 3] FIG. 3 is a graph showing a relationship between the spring ratio / a resonance frequency ratio between the hub and a ring, and a hub resonance magnification ratio.
[FIG. 4] FIG. 4 is a schematic perspective view illustrating an embodiment of a torsional damper of the invention.
[FIG. 5] FIG. 5 is a schematic cross-sectional perspective view of the torsional damper shown in FIG. 4 (torsional damper).

### DESCRIPTION OF EMBODIMENTS

The present invention is now described.

As described above, as for noise radiated from a hub, axial local resonance of the hub very often becomes problematic, and its frequency is as high as a few thousand Hz. In the radiation noise radiated from the hub, the local resonance of the hub is the largest, and therefore a technique for reducing vibrations by any vibration-proof means to reduce the radiation noise is necessary.

The axial resonance frequency of a vibration ring and the local resonance frequency of the hub greatly differ from each other and it is therefore hard to suppress the resonance of the hub with the use of the vibration ring as a dynamic vibration absorber.

However, a rubber member constituting a damper spring has frequency dependence and amplitude dependence as characteristics of a structure exhibiting viscoelastic attenuation, and shows a tendency that the dynamic spring constant is larger at higher frequencies and lower amplitudes.

When rubber for use in common torsional dampers has a dynamic spring constant of 1 at the resonance frequencies in the torsional and axial directions (a few hundred Hz), the dynamic spring constant is about twice as large as that at the hub local resonance frequency of a few thousand Hz.

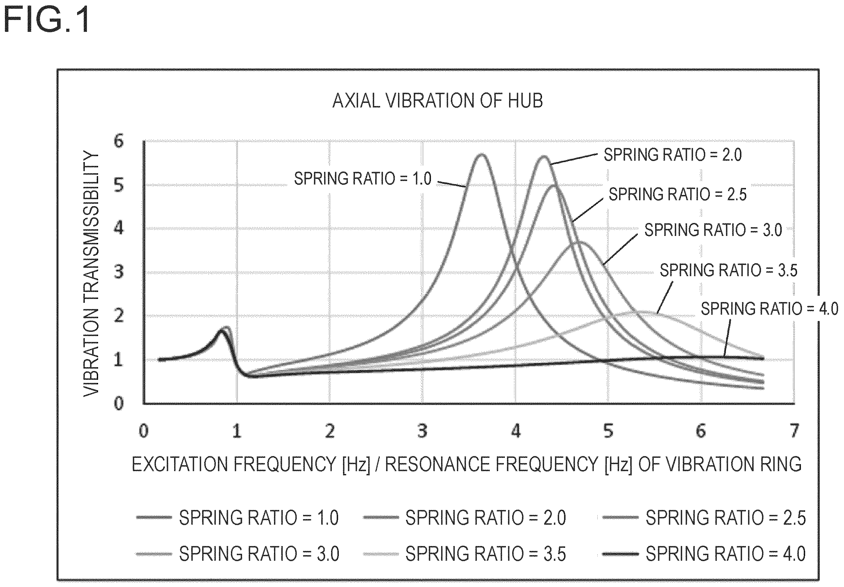

When a value obtained by dividing the dynamic spring constant of the rubber at the hub local resonance frequency by that of the rubber at the axial resonance frequency of the vibration ring is defined as spring ratio, the local resonance of the hub has changes shown in FIG. 1 in the calculation of vibrations using the spring ratio as a parameter.

The vibration model in FIG. 1 assumes that the local resonance frequency of the hub and the axial resonance frequency of the vibration ring are 2000 Hz and 600 Hz, respectively. The frequency ratio is 2000/600 = 3.33.

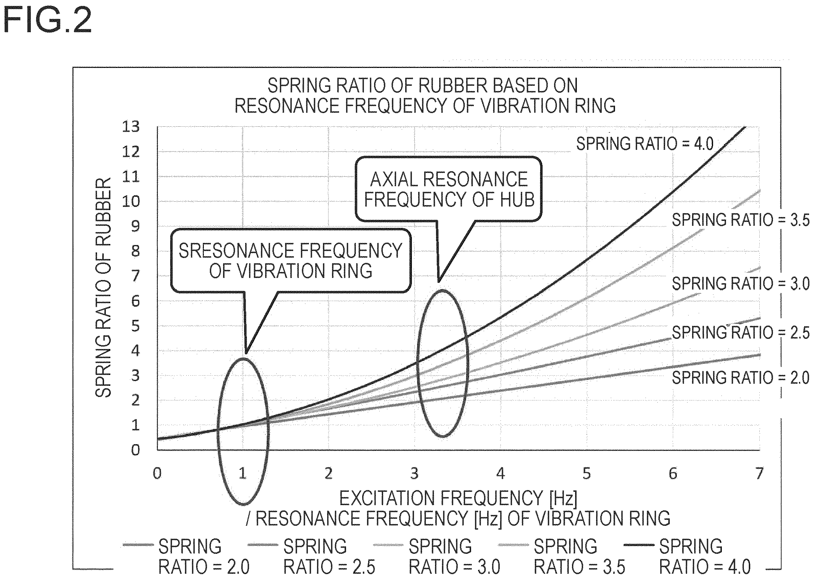

FIG. 2 in which the spring ratio is subjected to parameter study shows the effect of damping the local resonance of the hub by the dynamic vibration absorption effect at the spring ratio of 3 which is close to the frequency of 3.33.

From the above, with the use of a rubber material having the characteristic that the spring ratio (= dynamic spring constant at the local resonance frequency of the hub / dynamic spring constant at the axial resonance frequency of the vibration ring) is close to the ratio of the local resonance frequency of the hub to the axial resonance frequency of the vibration ring (hereinafter referred to as frequency ratio), the vibration ring serves as a dynamic vibration absorber to damp the local resonance of the hub, whereby noise radiated from the hub can be reduced.

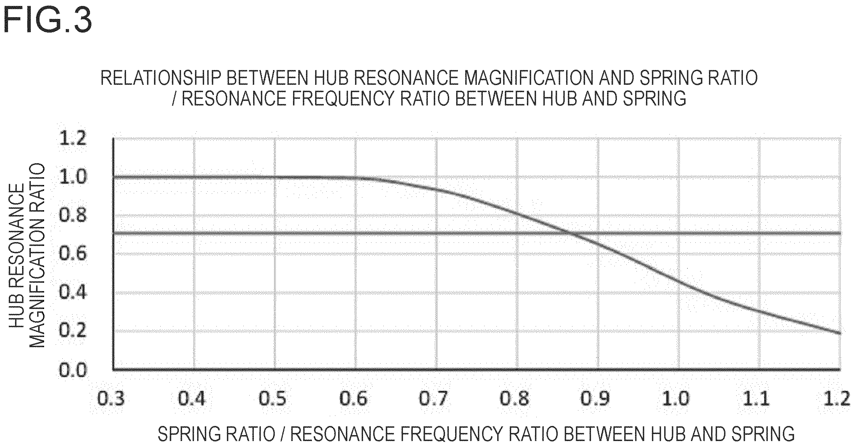

As for the noise radiated from the hub, the effect of reducing the radiated noise can be confirmed at the audible level by changing the vibrations of the hub to 1/V2 = 0.7071 times. The frequency ratio is obtained by dividing the local resonance frequency of the hub by the axial resonance frequency of the vibration ring, and the spring ratio is obtained by dividing the dynamic spring constant of the rubber during resonance of the hub by the dynamic spring constant of the rubber during resonance of the vibration ring. A graph is plotted with a ratio between the frequency ratio and the spring ratio on the horizontal axis and the resonance magnification obtained by dividing the vibration transmissibility (= resonance magnification) during resonance of the hub by the resonance magnification at a spring ratio of 1.0 on the vertical axis. The resonance magnification is 0.7071 or less in the region of 0.9 or more on the horizontal axis (see FIG. 3).

For example, assuming that the local resonance of the hub and the axial resonance of the vibration ring are 2000 Hz and 600 Hz, respectively, the frequency ratio is 2000/600 = 3.33, and 3.33 × 0.9 ≈ 3, which shows the rubber characteristics that the dynamic spring constant of the rubber at 2000 Hz is at least three times as large as that at 600 Hz.

From the above, it can be said that noise radiated from the hub is reduced in a torsional damper in which the spring ratio to the resonance frequency ratio between the hub and the ring takes a value of 0.9 or more.

The torsional damper as described above is a torsional damper of the invention.

The torsional damper of the invention is a torsional damper in which (spring ratio) / (resonance frequency ratio between hub and ring) takes a value of 0.9 or more.

The "spring ratio" as the numerator is a value obtained by dividing the "axial dynamic spring constant (N/mm) of the rubber ring at the resonance frequency of the single hub" by the "axial dynamic spring constant (N/mm) of the rubber ring at the axial resonance frequency of a vibration system including the vibration ring as the mass and the rubber ring as the spring."

This is expressed by: Spring ratio = (axial dynamic spring constant (N/mm) of rubber ring at resonance frequency of single hub)/(axial dynamic spring constant (N/mm) of rubber ring at axial resonance frequency of vibration system including vibration ring as mass and rubber ring as spring).

The "axial dynamic spring constant (N/mm) of the rubber ring at the resonance frequency of the single hub" means a value determined as follows:
First, the torsional damper is connected to a vibration exciter in the translational direction and is excited in the axial direction.

Next, acceleration pickups are attached to three locations including an exciter shaft, a hub outer peripheral part, and the vibration ring.

Next, vibrations are excited in the range from low frequencies to high frequencies to measure the vibration transmissibility.

Next, dimensions of the respective portions of the hub are measured to calculate the inertial mass distribution and the stiffness distribution of the hub by FEM analysis.

Next, the vibration transmissibility and the FEM analysis results are input in the equations of motion (computer software) of a hub resonance system and a vibration ring resonance system to calculate the frequency dependence of the axial spring constant of the rubber ring.

In this way, the resonance frequency of the single hub and the axial dynamic spring constant of the rubber ring are determined by actual measurement and computer calculation.

The "axial dynamic spring constant (N/mm) of the rubber ring at the axial resonance frequency of a vibration system including the vibration ring as the mass and the rubber ring as the spring" means a value determined using a measuring device including hardware functions for measuring the spring constant of the rubber and software.

The "resonance frequency ratio between the hub and the ring" as the denominator is a value obtained by dividing the "axial resonance frequency (Hz) of the single hub" by the "axial resonance frequency (Hz) of the vibration system including the vibration ring as the mass and the rubber ring as the spring."

This is expressed by: (Resonance frequency ratio between hub and ring) = (axial resonance frequency (Hz) of single hub)/(axial resonance frequency (Hz) of vibration system including vibration ring as mass and rubber ring as spring).

The "axial resonance frequency of the single hub" means, as described above, a value determined by a method which includes attaching to the vibration exciter, attaching the acceleration pickups to the exciter shaft and the hub outer peripheral part, exciting in the range from low frequencies to high frequencies, and measuring the vibration transmissibility.

The "axial resonance frequency (Hz) of the vibration system including the vibration ring as the mass and the rubber ring as the spring" means, as described above, a value determined by actual measurement using the vibration exciter or modal analysis using hammering.

The torsional damper of the invention is described by way of a specific example using drawings.

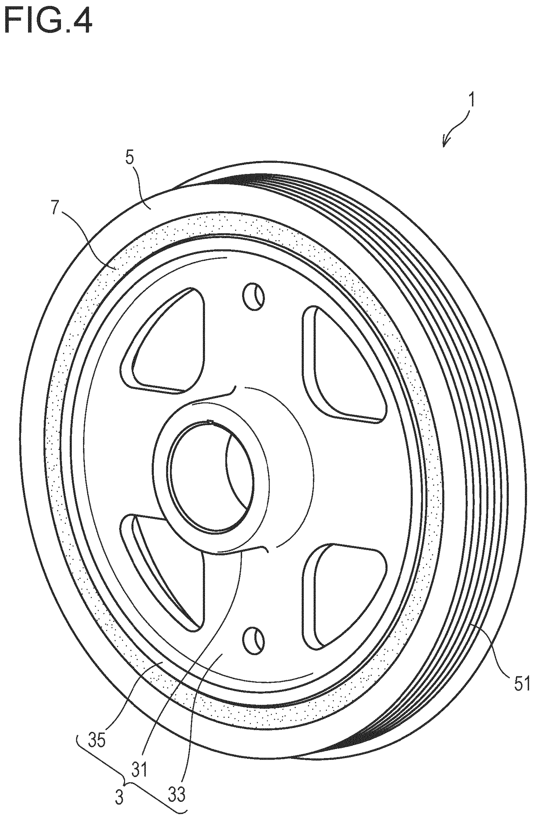

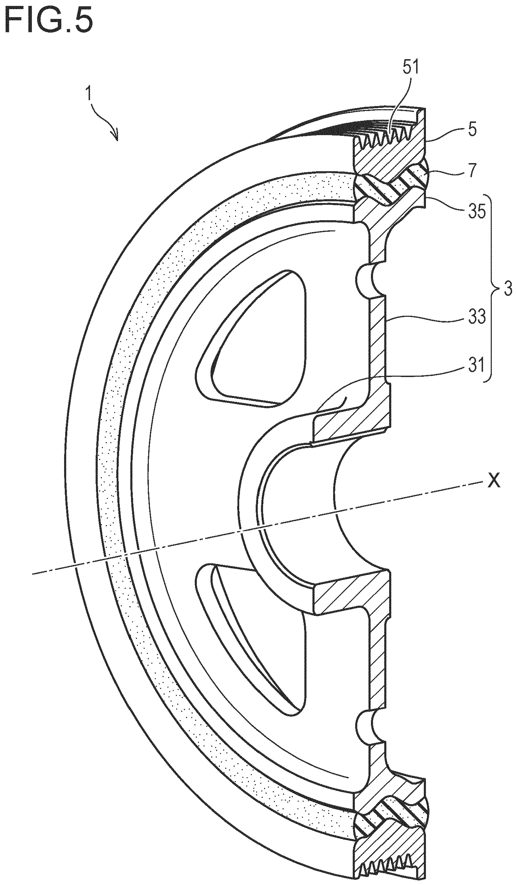

FIG. 4 is a schematic perspective view illustrating an embodiment of a torsional damper of the invention, and FIG. 5 is a schematic cross-sectional perspective view of the torsional damper shown in FIG. 4.

A torsional damper 1 in the embodiment illustrated in FIG. 4 and FIG. 5 can be used by being attached to an end of a crankshaft of an engine in a vehicle or the like. The torsional damper 1 has the function of absorbing shaft torsional resonance of the crankshaft and the function of suppressing engine vibration and noise. Further, the torsional damper also serves as a drive pulley that transmits power from the rotating crankshaft to auxiliary devices through a belt.

The torsional damper 1 has a hub 3, a vibration ring 5, and a rubber ring 7.

The hub 3 includes a boss part 31, a stay part 33, and a rim part 35.

The boss part 31 is provided at a central portion of the hub 3 in its radial direction. The boss part 31 is connected to the end of the crankshaft and the hub 3 is driven to rotate about its central axis X.

The stay part 33 extends in the radial direction from the boss part 31.

The rim part 35 is provided on an outer peripheral side of the stay part 33. The rim part 35 has a cylindrical shape and the vibration ring 5 is connected to an outer peripheral side of the rim part 35 via the rubber ring 7.

A metallic material such as cast iron or the like can be used as a raw material to form each of the boss part 31, the stay part 33, and the rim part 35. They can be formed particularly using flake graphite cast iron, spheroidal graphite cast iron, hot-rolled steel sheet for use in automobile structures or the like. Examples of the flake graphite cast iron that may be illustrated include FC100, FC150, FC200, FC250, FC300 and FC350. Examples of the spheroidal graphite cast iron that may be illustrated include FCD350-22, FCD350-22L, FCD400-18, FCD400-18L, FCD400-15, FCD450-10, FCD500-7, FCD600-3, FCD700-2, FCD800-2, FCD400-18A, FCD400-18AL, FCD400-15A, FCD500-7A, and FCD600-3A. Examples of the rolled steel sheet for use in automobile structures that may be illustrated include SAPH310, SAPH370, SAPH410, and SAPH440.

The vibration ring 5 is placed outside the hub 3 in its radial direction and pulley grooves 51 over which a belt is to be stretched are formed at its outer peripheral surface. The pulley grooves 51 serve as a pulley for power transmission.

A metallic material such as cast iron or the like can be used as a raw material to form the vibration ring 5. Flake graphite cast iron can be used as a raw material. This is because the flake graphite cast iron has high vibration absorbing ability and is also excellent in abrasion resistance. Examples of the flake graphite cast iron that may be illustrated include FC100, FC150, FC200, FC250, FC300 and FC350.

The rubber ring 7 is inserted into a gap portion between an outer peripheral surface of the hub 3 and an inner peripheral surface of the vibration ring 5. The rubber ring 7 serves to reduce torsional vibration of the crankshaft that occurs while a vehicle or the like is moving, thus preventing breakage, or to reduce noise and vibration due to engine vibration.

The rubber ring 7 has an important role to obtain a torsional damper in which the spring ratio to the resonance frequency ratio between the hub and the ring takes a value of 0.9 or more.

The rubber ring 7 preferably has a tanδ of not less than 0.27 and a dynamic magnification of not more than 1.61, more preferably has a tanδ of not less than 0.27 and a dynamic magnification of not more than 1.46, and even more preferably has a tanδ of not less than 0.35 and a dynamic magnification of not more than 1.46.

tanδ means a value obtained by measurement using a conventionally known method except that the excitation frequency is 100 Hz, the rubber distortion is 1%, and the temperature is 60°C.

Dynamic magnification means a value obtained by measurement using a conventionally known method except that the excitation frequency is 100 Hz/1 Hz, the rubber distortion is 1%, and the temperature is 60°C.

This application claims priority based on Japanese Patent Application No. 2022-3618 filed on January 13, 2022, the entire disclosure of which is incorporated herein by reference.

## Claims

1. A torsional damper in which a spring ratio to a resonance frequency ratio between a hub and a ring takes a value of 0.9 or more.
